# EUROPÄISCHE PATENTSCHRIFT

(11) **EP 1 533 520 B1**
(45) Veröffentlichungstag und Bekanntmachung des Hinweises auf die Patenterteilung: **19.10.2011**
(21) Anmeldenummer: 04018845.0
(22) Anmeldetag: 09.08.2004
(51) Int. Cl.: F03D 7/02, F15B 11/024

(54) **Elektrohydraulische Regenerativ-Steuervorrichtung zur Rotorblattverstellung einer Windkraftanlage**
Electrohydraulic regenerative control system for the blade pitch control of a wind turbine
Système de réglage électrohydraulique régénérative de l'incidence des pales de turbine éolienne

(30) Priorität: 18.11.2003 DE 20317749 U
(43) Veröffentlichungstag der Anmeldung: 25.05.2005
(73) Patentinhaber: HAWE Hydraulik SE, 81673 München (DE)
(72) Erfinder: Heusser, Martin, Dipl.-Ing. Univ., 81245 München (DE); Nocker, Andreas, 86971 Peiting (DE)
(74) Vertreter: Grünecker, Kinkeldey, Stockmair & Schwanhäusser

(56) Entgegenhaltungen:
- EP-A- 1 389 686
- EP-A- 1 413 773
- FR-A- 2 748 296
- US-A- 4 503 673
- US-A- 5 415 076
- US-B1- 6 457 487
- US-B1- 6 467 264

## Beschreibung

Die Erfindung betrifft eine elektrohydraulische Regenerativ-Steuervorrichtung gemäß Oberbegriff des Anspruchs 1.

Für Windkraftanlagen gelten für die Rotorblattverstellung hohe Anforderungen an die Funktionalität und die Betriebssicherheit. Eine Rotorblattverstellung wird in einem Regelkreis unter Berücksichtigung verschiedener Parameter beispielsweise durchgeführt, um die Rotordrehzahl konstant zu halten. Die Rotorblätter werden hierfür mehr oder weniger in den oder aus dem Wind gestellt und im Falle einer Notaus-Situation vollständig aus dem Wind gedreht. Die Steuervorrichtung für jedes Rotorblatt ist im Rotor angeordnet und hydraulisch und elektrisch über eine Drehdurchführungs-Schnittstelle mit anderen Steuerkomponenten verbunden, die sich meist in der den Rotor abstützenden Turmdrehgondel befinden. Bei der Regelung und im Falle eines Schadens an der hydraulischen Übertragung soll die Steuerung zumindest zum Verstellen des Rotorblattes aus dem Wind autark funktionieren. Die Steuerung soll die empfindlichen und teuren Rotorblätter ohne drastische Beschleunigungen oder Verzögerungen verstellen, schmutzunempfindlich sein und feinfühlig ansprechen.

Bei einer früheren, in der Praxis eingesetzten elektrohydraulischen nicht regenerativen Steuervorrichtung ist ein 4/3-Proportional-Wege-Schieberventil vorgesehen, das nicht nur funktionsbedingt mit Leckage arbeitet, sondern auch außerordentlich teuer ist. Da die kolbenseitige und die kolbenstangenseitige Kammer getrennt beaufschlagt und entlastet wurde, sind große Durchflussquerschnitte erforderlich und mussten große Strommengen bewegt werden, so dass ein außerordentlich großvolumiger und teurer und Bauraum beanspruchender Druckspeicher gebraucht wurde.

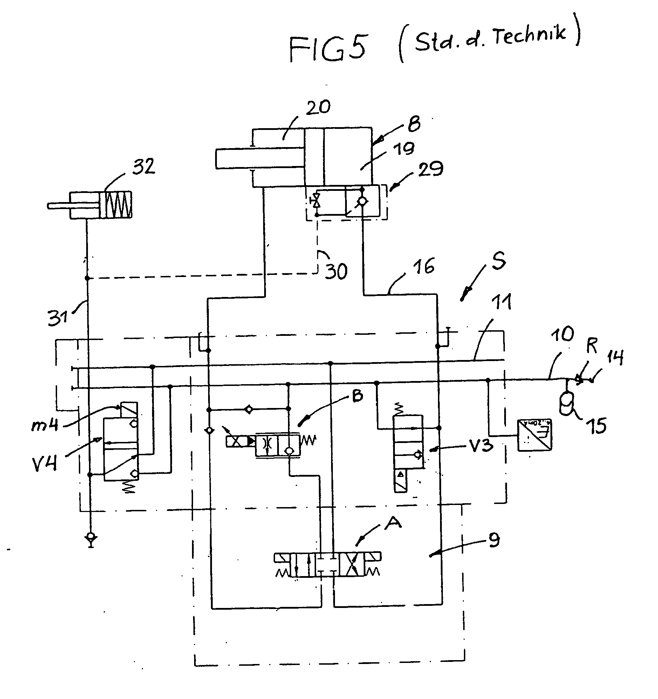

Bei einer ebenfalls aus der Praxis bekannten, jüngeren Lösung (Fig. 5) wird, um eine Blattverstellung aus dem Wind mit einer kleineren Druckmittelmenge durchführen zu können, das altbekannte Regenerativ-Prinzip angewendet. Dies bedeutet, dass der Hydraulikzylinder mit einem Differentialkolben ausgestattet ist, der in der kolbenstangenseitigen Kammer eine kleinere Beaufschlagungsfläche hat als in der kolbenseitigen Kammer. Beim Druckbeaufschlagen der kolbenseitigen Kammer wird das aus der kolbenstangenseitigen Kammer verdrängte Druckmittel wieder in die kolbenseitige Kammer eingespeist. Dadurch kann ein kleinerer Druckspeicher verwendet werden. Die Strömungswege in und aus den beiden Kammern sind an ein 4/3-Wege-Magnetschieberventil angeschlossen. Zwischen dem Schieberventil und dem Pumpenanschluss bzw. dem Druckspeicher ist ein 2/2-Wege-Proportional-Sitzventil vorgesehen, das in stromlosem Zustand seine Absperrstellung einnimmt. Das Wegeventil hat eine abgesperrte Neutralstellung. Aus der kolbenstangenseitigen Kammer verdrängtes Druckmittel wird über das Sitzventil und das Wegeventil in die kolbenseitige Kammer geführt. Da das Wegeventil für bestimmte Betriebszustände eine hohe Strömungsrate bzw. große Druckmittelmenge verarbeiten können muss, benötigt es wie auch das Sitzventil große Durchgänge, so dass die Ventile groß bauen und teuer sind. Außerdem beeinflusst der Durchströmwiderstand des stromab des Sitzventils vorgesehenen Wegeventils die Feinfühligkeit bei der Proportionalsteuerung in unerwünschter Weise. Bei dieser bekannten Lösung sind aus Sicherheitsgründen ferner ein Notaus-Ventil vorgesehen, das in stromlosem Zustand den Pumpenanschluss direkt mit der kolbenseitigen Kammer verbindet, ferner ein entsperrbares Rückschlagventil zum Absichern der kolbenseitigen Kammer gegen Leckage über das Wegeschieberventil und schließlich ein Magnetventil, das bei Regenerativbetrieb einen Arretierfederspeicherzylinder spannt und bei Notaus, oder falls erforderlich, den Arretierfederspeicherzylinder entlastet, um das aus dem Wind gestellte Rotorblatt mechanisch zu arretieren. Die bekannte Lösung ist baulich aufwendig und teuer.

Bei der aus FR 27 48 296 A bekannten pneumatischen Blattverstellvorrichtung einer Windkraftanlage sind vier Magnetventile und zwei Drucksensoren vorgesehen. Die Magnetventile werden von einer programmierten Steuerung betätigt. In die Steuerung sind auch Positionsmelder integriert. Die Bauweise der Pneumatik-Magnetventile ist nicht offenbart.

Eine aus US 5 415 076 A bekannte Hydrauliksteuerung mit einer Regenerations-Ventileinrichtung für einen doppelt beaufschlagbaren Differential-Zylinder zum Abstützen einer Last ist an der Senkseite des Hydraulikzylinders ein 2/2-Proportional-Druckregelventil in einer Ablassleitung zum Tank vorgesehen, während zur Richtungs- und Geschwindigkeitssteuerung ein 4/3-Proportional-Wege-Steuerventil zwischen dem Hydraulikzylinder und der als Regelpumpe ausgelegten Druckquelle angeordnet ist. Die Steuervorrichtung enthält sechs Rückschlagventile und zusätzlich zwei vorgesteuerte Druckbegrenzungsventile. Die Hydrauliksteuervorrichtung ist zur Blattverstellung einer Windkraftanlage nicht brauchbar.

Die elektrohydraulische Rotorblattverstell-Steuervorrichtung gemäß US 4 503 673 A arbeitet mit einem einseitig beaufschlagbaren Hydraulikzylinder und vier 2/2-Magnetschaltventilen in Schwarz/Weiß-Auslegung sowie einem vom Druck in der kolbenstangenseitigen Kammer des Hydraulikzylinders vorgesteuerten Druckbegrenzungsventil zum Tank. Ein Regenerativbetrieb ist nicht vorgesehen.

Weiterer Stand der Technik ist enthalten in US 6 457 487 B1, US 6 467 264 B1, EP 1 413 773 A und EP 1 389 686 A.

Der Erfindung liegt die Aufgabe zugrunde, eine elektrohydraulische Regenerativ-Steuervorrichtung der eingangs genannten Art anzugeben, die baulich einfach, kostengünstig und betriebssicher ist.

Die gestellte Aufgabe wird mit den Merkmalen des Anspruchs 1 gelöst.

2/2-Wege-Proportional-Sitzventile sind kostengünstig, schmutzunempfindlich, wartungsfrei und betriebssicher und bauen klein. Ferner wird durch die Verschaltung der beiden Ventile erreicht, dass keine großen Strömungsraten verarbeitet werden müssen. Der Verrohrungsaufwand bleibt minimal. Die Sitzventile garantieren Leckagefreiheit in ihren Absperrstellungen. Der Druck in jeder Kammer lässt sich über die Sitzventile sehr feinfühlig regeln, so dass ein rasches Ansprechverhalten erzielt wird.

Die beiden Proportional-Sitzventile sind elektrisch so geschaltet, dass das eine in stromlosem Zustand die Absperrstellung und das andere in stromlosem Zustand die volle Durchgangsstellung einnimmt. Dadurch wird der Hydraulikzylinder hydraulisch blockiert.

Dabei kann es zweckmäßig sein, die kolbenstangenseitige Kammer durch ein zusätzliches Rückschlagventil gegenüber dem Pumpenanschluss und dem Druckspeicher leckagefrei zu isolieren.

Zweckmäßig ist ferner ein Kolbendruckspeicher, da bisher übliche Membrandruckspeicher unter der Drehbewegung des Rotors zu Störungen neigen.

Um bei Notaus, bedingt z.B. durch einen Stromausfall, die Rotorblätter aus dem Wind zu stellen, ist es zweckmäßig, in einer Beipassleitung zur Kolbenstangenseite ein einfaches 2/2-Wege-Schwarz/Weiß-Magnet-Notaus-Sitzventil vorzusehen. Im normalen Regenerativbetrieb und auch bei Entlastung der kolbenseitigen Kammer bleibt dieses Sitzventil leckagefrei. Bei einer Notaus-Situation wird die kolbenseitige Kammer über das Sitzventil beispielsweise aus dem Druckspeicher gespeist.

Zweckmäßig wird, die Steuervorrichtung durch einen Arretierfederspeicher-Zylinder und ein 3/2-Wege-Magnetsitzventil ergänzt, die bei einer Notaus-Situation nach der Verstellung des Rotorblattes aus dem Wind das Rotorblatt mechanisch festlegen.

Die beiden Proportional-Sitzventile lassen sich baulich zusammenfassen, was die Verrohrung bzw. die Gestaltung der Strömungswege vereinfacht und Bauraum spart.

Anhand der Zeichnung werden Ausführungsformen des Erfindungsgegenstandes sowie eine aus der Praxis bekannte Lösung (Stand der Technik) beschrieben. Es zeigen:
- Fig. 1: eine schematische Seitenansicht, teilweise im Schnitt, eines Teils einer Windkraftanlage mit elektrohydraulischer Rotorblattverstellung,
- Fig. 2: eine elektrohydraulische Steuervorrichtung zur Rotorblattverstellung,
- Fig. 3: eine elektrohydraulische Steuervorrichtung zur Rotorblattverstellung, in einer anderen Ausführungsform,
- Fig. 4: eine elektrohydraulische Steuervorrichtung zur Rotorblattverstellung, in einer weiteren Ausführungsform, und
- Fig. 5: eine elektrohydraulische Steuervorrichtung zur Rotorblattverstellung gemäß Stand der Technik.

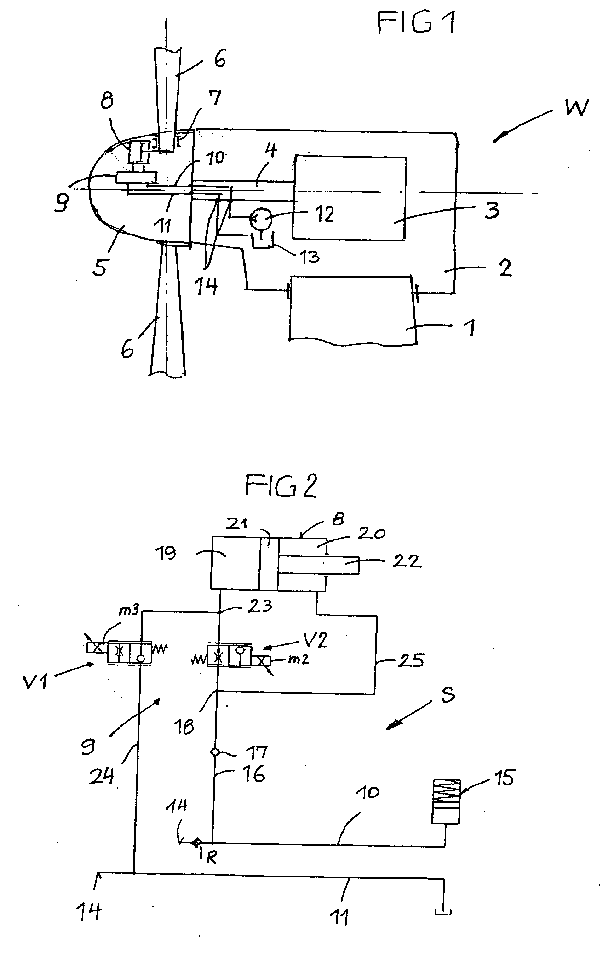

In einer Windkraftanlage W in Fig. 1 sitzt auf einem Turm 1 eine drehbare Turmdrehgondel 2, in der ein Generator 3 untergebracht ist, der über eine Verbindungswelle 4 von einem mit Rotorblättern 6 bestückten Rotor 5 angetrieben wird. Jedes Rotorblatt 6 ist um die Rotorblattachse innerhalb eines vorbestimmten Winkelbereiches verstellbar, um das Rotorblatt in oder aus dem Wind zu bringen (pitching-in; pitching-out). Angrenzend an eine Rotorblatt-Drehlagerung 7 greift zur Rotorblattverstellung ein Hydraulikzylinder 8 am Rotorblatt 6 an. Der Hydraulikzylinder 8 wird über eine Ventilkombination 9 aus einer Druckleitung 10 und in eine Tankleitung 11, gesteuert die über Drehdurchführungs-Schnittstellen 14, beispielsweise an der Welle 4, an eine Pumpe 12 und einen Tank 13 angeschlossen sind.

Die Rotorblattstellung wird beispielsweise permanent geregelt, um eine bestimmte Rotordrehzahl zu halten. Rotorblattverstellungen müssen sehr feinfühlig und ohne abrupte Verzögerungen und Beschleunigungen ausgeführt werden, weil die Rotorblätter sehr teuer und empfindlich sind. Die elektrohydraulische Steuervorrichtung zur Rotorblattverstellung ist im Rotor 5 untergebracht und muss, zumindest zur Verstellung aus dem Wndautark und wartungsfrei funktionieren.

Bei einer ersten Ausführungsform einer elektrohydraulischen Regenerativ-Steuervorrichtung S zur Rotorblattverstellung in Fig. 2 ist der Hydraulikzylinder 8 ein Differentialzylinder mit einer Kolbenstange 22 und einem Differentialkolben 21, der eine kolbenseitige Kammer 19 und eine kolbenstangenseitige Kammer 20 trennt. An die von der Schnittstelle 14 kommende, über ein Rückschlagventil R abgesicherte Druckleitung 10 ist der Druckspeicher 15, der zweckmäßig ein Kolbendruckspeicher ist, angeschlossen. Von der Druckleitung 10 zweigt ein Strömungsweg 16 zur kolbenseitigen Kammer 19 ab. Im Strömungsweg 16 ist in der Ventilkombination 9 ein 2/2-Wege-Proportionalsitzventil V2 mit einem Proportionalmagneten m2 angeordnet, das in stromlosem Zustand durch eine Feder die gezeigte, volle Durchgangsstellung einnimmt. Dieses Proportionalsitzventil V2 ist ein Regelventil, wie durch die parallelen Linien neben dem Ventilsymbol angedeutet ist. Zwischen der Druckleitung 10 und einer Abzweigung 18 stromauf des Proportional-Sitzventils V2 ist ein zur Druckleitung 10 sperrendes Rückschlagventil 17 vorgesehen. Von der Abzweigung 18 führt eine Regenerativleitung 25 direkt und unter Umgehung des Proportionalsitzventils V2 zur kolbenstangenseitigen Kammer 20. Stromab des Proportionalsitzventils V2 ist an einer Abzweigung 23 des Strömungswegs 16 eine Rückströmleitung 24 zur Tankleitung 11 angeschlossen. In der Rückströmleitung 24 ist ein 2/2-Wege-Proportionalsitzventil V1 mit seinem Proportionalmagneten m3 angeordnet, das in stromlosem Zustand durch eine Feder die gezeigte Absperrstellung einnimmt. Beide Proportional-Sitzventile V1, V2 zeichnen sich durch eine leckagefreie Absperrstellung aus. Zweckmäßig sind die Ventile V1, V2 so ausgebildet, wie die aus EP 0 955 472 A bekannt.

Durch Ausfahren der Kolbenstange 22 wird das Rotorblatt 6 (Fig. 1) beispielsweise aus dem Wind gestellt, hingegen durch Einfahren der Kolbenstange 22 in den Wind.

Die beiden Proportionalmagneten m2, m3 werden wechselweise von einer übergeordneten Steuerkomponente, beispielsweise in der Turmdrehgondel 2, angesteuert, um eine Rotorblattverstellung vorzunehmen, wobei beispielsweise die Windgeschwindigkeit ein Regelparameter ist, der berücksichtigt wird, um permanent eine konstante Rotordrehzahl zu erzielen.

Bei stromlosem Proportionalmagneten m3 und bestromtem Permanentmagneten m2 ist der Kolben 21 hydraulisch blockiert. Muss das Rotorblatt mehr aus dem Wind verstellt werden, dann wird die Bestromung des Proportionalmagneten m2 zurückgenommen, so dass trotz Druckgleichheit in den Kammern 19, 20 dank der größeren Beaufschlagungsfläche des Kolbens 21 in der kolbenseitigen Kammer 19 die Kolbenstange 22 um ein bestimmtes Maß ausgefahren wird, ehe der Proportionalmagnet m2 zum Anhalten dieser Bewegung wieder voll bestromt wird. Dabei wird nach dem Regenerativ-Prinzip vorgegangen, d.h., das aus der kolbenstangenseitigen Kammer 20 ausgeschobene Druckmittel wird über das Proportional-Sitzventil V2 in die kolbenseitige Kammer 19 eingespeist, so dass der Druckspeicher 15 bei sperrendem Rückschlagventil R, wenn überhaupt, nur eine geringe Druckmittelmenge nachzuführen braucht. Ist das Rotorblatt weiter in den Wind zu stellen, dann wird der Proportionalmagnet m2 voll bestromt belassen und der Proportionalmagnet m3 wie erforderlich bestromt, so dass Druckmittel aus der kolbenseitigen Kammer 19 in die Tankleitung 11 abströmt und der Druck des Druckspeichers 15 in der kolbenstangenseitigen Kammer 20 den Kolben verstellt, bis der Proportionalmagnet m3 wieder stromlos geschaltet wird.

Ist das Rotorblatt voll aus dem Wind zu stellen, z.B. in einer Notaus-Situation, dann wird das Proportionalsitzventil V2 in seine volle Durchgangsstellung (wie gezeigt) verstellt, bis der Kolben 21 seine voll ausgefahrene Endstellung erreicht.

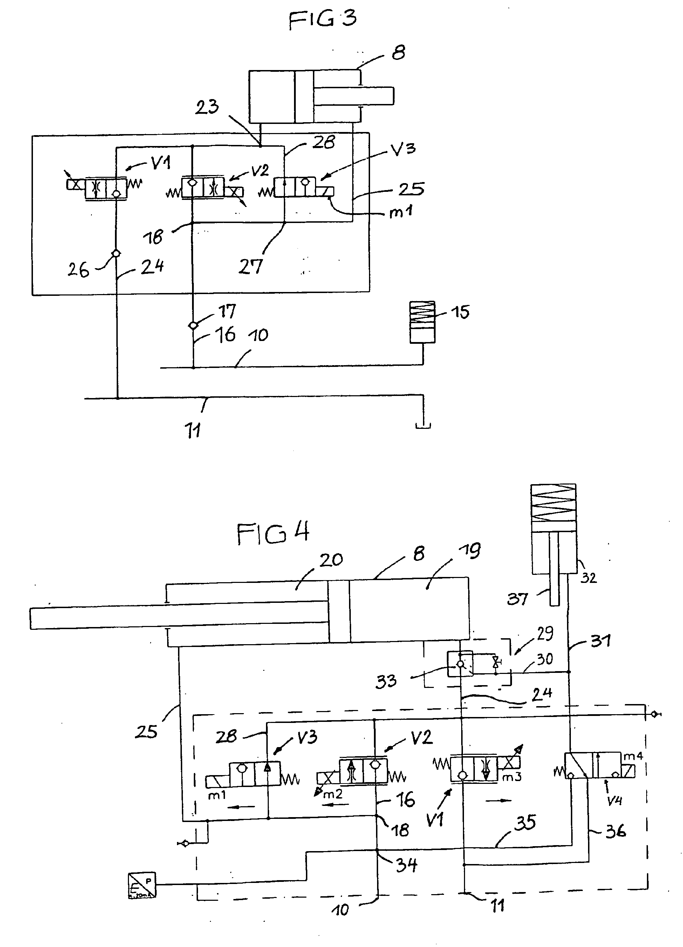

In Fig. 3 ist die elektrohydraulische Regenerativ-Steuervorrichtung von Fig. 1 im Hinblick auf noch schnelleres Ansprechen, z.B. bei einer Notaus-Situation, erweitert.

Von einer zwischen der Abzweigung 18 und der kolbenstangenseitigen Kammer angeordneten Abzweigung 27 führt eine Beipassleitung zur Abzweigung 23 bzw. zur kolbenseitigen Kammer des Hydraulikzylinders 8. In der Beipassleitung ist ein 2/2-Wege-Schwarz/Weiß-Magnetsitzventil V3 mit einem Schwarz/Weiß-Magneten m1 angeordnet. Dieses Magnetsitzventil V3 ist im normalen Regenerativbetrieb bestromt und in seiner Absperrstellung, so dass es keinen Einfluss hat. Bei einer Notaus-Situation, beispielsweise bei Stromausfall, drückt die Feder des Magnetsitzventils V3 dieses in die Durchgangsstellung (wie in Fig.3 gezeigt), so dass Druckmittel, beispielsweise aus dem Druckspeicher 15, oder von Pumpenanschluss, direkt in die kolbenseitige Kammer strömt, wobei das aus der kolbenstangenseitigen Kammer verdrängte Druckmittel ergänzend mit eingeführt wird, bis der Kolben seine voll ausgefahrene Stellung erreicht hat.

Im Abströmweg 24 ist stromab des Proportionalsitzventils V1 ein Rückschlagventil 26 vorgesehen, das in Strömungsrichtung zum Proportionalsitzventil V1 sperrt.

In Fig. 4 ist die elektrohydraulische Regenerativ-Steuervorrichtung der Fig. 3 weiter ergänzt durch zusätzliche Sicherheitsmaßnahmen. Und zwar sind weiterhin vorgesehen: Ein Arretierfederspeicherzylinder 32 mit einem Arretierstift 37 zum mechanischen Arretieren des Rotorblatts in der voll aus dem Wind genommenen Stellung; eine Absicherung 29 mit einem hydraulisch entsperrbaren Rückschlagventil 33; und ein 3/2-Wege-Schwarz/Weiß-Magnetsitzventil V4 mit einem Schwarz/Weiß-Magneten m4. Das Magnetsitzventil V4 ist über eine Leitung 35 an eine Abzweigung 34 beispielsweise der Zuströmleitung 16, und über eine Leitung 36 an die Tankleitung 10 angeschlossen. Vom Magnetsitzventil V4 führt eine Arbeitsleitung 31 zur Druckseite des Arretierfederspeicherzylinders 32. Von der Arbeitsleitung 31 zweigt eine Vorsteuerleitung 30 zum Entsperren des Rückschlagventils 33 im Abströmweg 24 ab.

Das Magnetsitzventil V4 verbindet in stromlosem Zustand die Arbeitsleitung 31 über die Leitung 36 mit der Tankleitung 11, wobei es die Leitung 35 absperrt. Im Regenerativbetrieb ist der Schwarz/Weiß-Magnet m4 bestromt, so dass die Arbeitsleitung 31 aus der Pumpenleitung 10 beaufschlagt und der Arretierfederspeicherzylinder eingefahren ist. Der Druck in der Arbeitsleitung 31 entsperrt das Rückschlagventil 33, so dass falls erforderlich das Druckmittel aus der kolbenseitigen Kammer 19 wie gewünscht abströmen kann.

Bei einer Notaus-Situation schaltet das Magnetsitzventil V3 in die gezeigte Durchgangsstellung um, so dass die kolbenseitige Kammer 19 beaufschlagt und die Kolbenstange ausgefahren wird, um das Rotorblatt aus dem Wind zu stellen. Gleichzeitig verbindet das Magnetsitzventil V4 in nun stromlosem Zustand (wie in Fig. 4 gezeigt) die Arbeitsleitung 31 mit der Tankleitung 11, so dass der Stift 37 ausgefahren wird und das Rotorblatt mechanisch festlegt, sobald dieses voll aus dem Wind gestellt ist. Da dann die Steuerleitung 30 druckentlastet ist, nimmt das Rückschlagventil 33 seine Absperrstellung ein, so dass sich der Kolben im Hydraulikzylinder 8 nicht mehr selbsttätig zu bewegen vermag.

Die erfindungsgemäße elektrohydraulische Regenerativ-Steuervorrichtung ermöglicht eine drastische Kostenreduktion, beispielsweise um mehr als 50 % gegenüber herkömmlichen Lösungen. Die Steuervorrichtung kann mit einem Druck bis zu etwa 250 bar arbeiten, so dass ein Kolbendruckspeicher mit einem Fassungsvermögen von etwa 20 bis 25 I ausreicht. Damit lässt sich beispielsweise eine Rotorblattverstellung über annähernd 90° von voll im Wind bis voll aus dem Wind innerhalb von 10 Sek. vomehmen. Bei der permanenten Rotorblatt-Stellungsregelung mit zum Teil nur geringen Winkelstellbereichen lassen sich Stellzeiten im Bereich von nur einer Sekunde oder weniger erzielen. Die 2/2-Wege-Proportional-Sitzventile sind marktüblich und können baugleich sein. Zweckmäßig operieren sie mit einer hydraulischen Vorsteuerung für das Sitzventil-Schließglied.

Die bekannte elektrohydraulische Regenerativ-Steuervorrichtung S in Fig. 5 weist neben einigen, beispielsweise auch aus Fig. 5 ersichtlichen Komponenten in der Ventilkombination 9 ein 4/3-Wege-Magnet-Schieberventil A auf, an das die beiden Kammern 19, 20 getrennt angeschlossen sind. In der gezeigten Neutralstellung werden die Kammern 19, 20 abgesperrt, wobei funktionsnotwendig im Wegeschieberventil Leckage auftritt. Zwischen der Druckleitung 10 und dem Druckeingang des Wegeschieberventils A ist ein 2/2-Wege-Proportional-Sitzventil vorgesehen, das im gezeigten stromlosen Zustand in seiner Absperrstellung ist. Die Sicherungseinrichtung 29 zum Absichern der kolbenseitigen Kammer 19 ist funktionsnotwendig, weil die Leckage des Wegeschieberventils A auch in der Neutralstellung einen Druckabbau in die Tankleitung 11 erzeugt. Das Wegeschieberventil A muss zumindest bei der Entlastung der kolbenseitigen Kammer 19 einen hohen Druckmitteldurchsatz verarbeiten, d.h. große Durchgangsquerschnitte aufweisen. Ähnliches gilt auch für das Proportionalsitzventil B.

## Patentansprüche

1. Elektrohydraulische Regenerativ-Steuervorrichtung (S) zur Rotorblattverstellung einer Windkraftanlage (W), mit einem einen Differentialkolben (21, 22) enthaltenden, doppelt beaufschlagbaren Hydraulikzylinder (8), dessen kolbenseitige und kolbenstangenseitige Kammern (19, 20) über eine Magnetventilkombination (9) aus einer gemeinsamen Druckversorgung (12, 10) wahlweise im Regenerativbetrieb entweder gemeinsam druckbeaufschlagbar, oder absperrbar oder zu einem Tank (13) druckentlastbar sind, wobei die Ventilkombination zumindest im Strömungsweg (16) zur kolbenseitigen Kammer (19) wenigstens ein 2/2-Wege-Proportional-Sitzventil (V2) und die Druckversorgung stromauf eines Rückschlagventils (R) einen an einer Drehdurchführungs-Schnittstelle (14) zwischen dem die Steuervorrichtung (S) enthaltenden Rotor (5) und einer den Rotor stützenden Turmdrehgondel (2) vorgesehenen Pumpenanschluss und stromab des Rückschlagventils (R) wenigstens einen Druckspeicher (15) aufweist, **dadurch gekennzeichnet, dass** die Ventilkombination (9) zur Blattverstellung nur zwei funktionell separierte 2/2-Wege-Proportional-Sitzventile (V1, V2), jeweils mit leckagefreier Absperrstellung, umfasst, von denen das eine im Abströmweg (24) von der kolbenseitigen Kammer (19) zum Tank (13) und das andere im Zuströmweg (16) vom Pumpenanschluss zur kolbenseitigen Kammer (19) und stromab einer Abzweigung (18) einer vom Pumpenanschluss unter Umgehung des anderen 2/2-Wege-Proportional-Sitzventils (V2) direkt zur kolbenstangenseitigen Kammer (20) geführten Regenerativleitung (25) angeordnet ist.

2. Elektrohydraulische Regenerativ-Steuervorrichtung nach Anspruch 1, **dadurch gekennzeichnet, dass** das eine 2/2-Wege-Proportional-Sitzventil (V1) in stromlosem Zustand die Absperrstellung und das andere in stromlosem Zustand die volle Durchgangsstellung einnimmt.

3. Elektrohydraulische Regenerativ-Steuervorrichtung nach Anspruch 1, **dadurch gekennzeichnet, dass** zwischen dem Pumpenanschluss bzw. dem Druckspeicher (15) und der Abzweigung (18) ein zum Pumpenanschluss sperrendes Rückschlagventil (17) vorgesehen ist.

4. Elektrohydraulische Regenerativ-Steuervorrichtung nach Anspruch 1, **dadurch gekennzeichnet, dass** der Druckspeicher (15) ein Kolbendruckspeicher ist.

5. Elektrohydraulische Regenerativ-Steuervorrichtung nach Anspruch 1, **dadurch gekennzeichnet, dass** zwischen der Abzweigung (18) und der kolbenstangenseitigen Kammer (20) eine Beipassleitung (28) zur kolbenseitigen Kammer (19) vorgesehen ist, und dass in der Beipassleitung (28) ein in stromlosem Zustand eine Durchgangsstellung einnehmendes 2/2-Wege-Schwarz/Weiß-Magnetsitz-Notaus-Ventit (V3) vorgesehen ist, das bestromt eine leckagefreie Absperrstellung für die kolbenseitigen Kammer (19) einnimmt.

6. Elektrohydraulische Regenerativ-Steuervorrichtung nach wenigstens einem der vorhergehenden Ansprüche, **dadurch gekennzeichnet, dass** zwischen einer zu einem Arretierfederspeicherzylinder (32) geführten Arbeitsleitung (31) und dem Pumpenanschluss bzw. dem Tank ein 3/2-Wege-Magnetsitzventil (V4) angeordnet ist, das in stromlosem Zustand die Arbeitsleitung (31) mit dem Tank verbindet, dass die kolbenseitige Kammer (19) in Abströmrichtung durch ein hydraulisch aus der Arbeitsleitung (31) entsperrbares Rückschlagventil (33) abgesichert ist, und dass das 2/2-Wege-Schwarz/Weiß-Magnet-Notaus-Sitzventil (V3) und das 312-Wege-Magnet-Sitzventil (V4) im Regenerativbetrieb bestromt sind.

7. Elektrohydraulische Regenerativ-Steuervorrichtung nach Anspruch 1, **dadurch gekennzeichnet, dass** die zwei 2/2-Wege-Proportional-Sitzventile (V1, V2) mit ihren Proportionalmagneten (m3, m2) baulich zusammengefasst sind.

## Claims

1. Electrohydraulic regenerative control system (S) for adjusting a rotor blade (6) of a wind turbine (W), comprising a double actuated hydraulic cylinder (8) containing a differential piston (21, 22), the piston side and piston rod side chambers (19, 20) of which can be pressurised via a solenoid valve combination (9) from a common pressure supply (10, 12) in a regenerative operation either commonly, or can be blocked, or can be pressure relieved to a tank (13), the solenoid valve combination (9) comprising at least in a flow path (16) extending to the piston side chamber (19) at least a 2/2 multi-way proportional seat valve (V2) and the pressure supply comprising upstream of a check valve (R) a pump port at a rotary interface (14) between the rotor (5) containing the control system (S) and a rotary tower housing (2) supporting the rotor (5), and comprising downstream of the check valve (R) at least one pressure accumulator (15), **characterised in that** the solenoid valve combination (9) comprises for adjusting the rotor blades only two functionally separated 2(2 multi-way proportional seat valves (V1, V2), respectively operating with a leakage-free blocking position, among which one is arranged in a discharge path (24) from the piston side chamber (19) to the tank (13) and the other is arranged in a supply path (16) from the pump port to the piston side chamber (19) and downstream of a branch (18) of a regenerative line (25) extending from the pump port directly to the piston rod side chamber (20) and deviating the other 2/2 multi-way proportional seat valve (V2).

2. Electrohydraulic regenerative control system according to claim 1, **characterised in that** the one 2/2 multi-way proportional seat valve (V1) is brought in current-free condition into the blocking position while the other is brought in current-free condition into a full through flow position.

3. Electrohydraulic regenerative control system according to claim 1, **characterised in that** a check valve (17), blocking in flow direction to the pump port, is provided between the pump port or the pressure accumulator (15) and the branch (18).

4. Electrohydraulic regenerative control system according to claim 1, **characterised in that** the pressure accumulator (15) is a piston pressure accumulator.

5. Electrohydraulic regenerative control system according to claim 1, **characterised in that** a bypass line (28) extending to the piston side chamber (19) is provided between the branch (18) and the piston rod side chamber (20), and that a 2/2 multi-way black/white solenoid emergency switch-off valve (V3) is provided in the bypass line (28) which is brought in current-free condition into a through flow position and when supplied with current is brought in a leakage-free blocking position for the piston side chamber (19).

6. Electrohydraulic regenerative control system according to at least one of the preceding claims, **characterised in that** the 3/2 multi-way solenoid seat valve (V4) is arranged between a working line (31) extending to a blocking spring storing cylinder (32) and the pump port or the tank, which 3/2 multi-way solenoid seat valve (V) is connecting in current-free condition the working line (31) with the tank (13), that the piston side chamber (19) is safeguarded in outflow direction by a check valve (33) which can be opened hydraulically from the working line (31), and that the 2/2 multi-way black/white solenoid emergency switch-off seat valve (V3) and the 3/2 multi-way solenoid seat valve (V4) are supplied with current during regenerative operation.

7. Electrohydraulic regenerative control system according to claim 1, **characterised in that** the two 2/2 multi-way proportional seat valves (V1, V2) inclusive their proportional solenoids (m2, m3) are structurally combined.

## Revendications

1. Dispositif de commande régénérateur électro-hydraulique (S) pour le réglage de pales de rotor d'une installation éolienne (W), comprenant un vérin hydraulique (8) double effet qui comporte un piston différentiel (21, 22) et dont les chambres (19, 20) du côté piston et du côté tige de piston peuvent être, en mode régénération, sélectivement, soit conjointement sollicitées en pression, soit fermées, soit déchargées en pression vers un réservoir (13), par l'intermédiaire d'une combinaison d'électrovannes (9) à partir d'une alimentation en pression commune (12, 10), la combinaison de vannes présentant au moins une vanne à siège proportionnelle à 2/2 voies (V2) au moins dans le chemin d'écoulement (16) vers la chambre (19) du côté piston, et l'alimentation en pression présentant en amont d'une vanne anti-retour (R) un raccordement de pompe prévu à une interface de passage rotatif (14) entre le rotor (5) comportant le dispositif de commande (S) et une nacelle rotative à tour (2) supportant le rotor et au moins un réservoir de pression (15) en aval de la vanne anti-retour (R), **caractérisé en ce que** la combinaison de vannes (9) ne comprend que deux vannes à siège proportionnelles à 2/2 voies (V1, V2) fonctionnellement séparées pour le réglage des pales, chacune avec une position de fermeture sans perte, dont l'une est disposée dans le chemin d'échappement (24) de la chambre (19) du côté piston au réservoir (13) et l'autre est disposée dans le chemin d'arrivée (16) du raccordement de pompe à la chambre (19) du côté piston et en aval d'une dérivation (18) d'une conduite régénératrice (25) menant directement du raccordement de pompe à la chambre (20) du côté tige de piston en contournant l'autre vanne à siège proportionnelle à 2/2 voies (V2).

2. Dispositif de commande régénérateur électro-hydraulique suivant la revendication 1, **caractérisé en ce que** l'une des vannes à siège proportionnelles à 2/2 voies (V1) occupe la position de fermeture dans l'état hors tension et l'autre occupe la position de passage total dans l'état hors tension.

3. Dispositif de commande régénérateur électro-hydraulique suivant la revendication 1, **caractérisé en ce qu'**une vanne anti-retour (17) fermant vers le raccordement de pompe est prévue entre le raccordement de pompe ou le réservoir de pression (15) et la dérivation (18).

4. Dispositif de commande électro-hydraulique suivant la revendication 1, **caractérisé en ce que** l'accumulateur de pression (15) est un accumulateur de pression à piston.

5. Dispositif de contrôle électro-hydraulique à régénération suivant la revendication 1, **caractérisé en ce qu'**une conduite de bipasse (28) jusqu'à la chambre (19) du côté piston est prévue entre la dérivation (18) et la chambre (20) du côté tige de piston, et qu'une vanne de secours à siège magnétique tout ou rien à 2/2 voies (V3) qui occupe dans l'état hors tension une position de passage est prévue dans la conduite de bipasse (28), laquelle vanne occupe une position de fermeture sans perte pour la chambre (19) du côté piston dans l'état d'alimentation en courant.

6. Dispositif de commande régénérateur électro-hydraulique suivant l'une au moins des revendications précédentes, **caractérisé en ce qu'**une vanne à siège magnétique à 3/2 voies (V4) est disposée entre une conduite de travail (31) menant à un vérin accumulateur à ressort d'arrêt (32) et le raccord de pompe ou le réservoir, laquelle vanne relie la conduite de travail (31) au réservoir dans l'état hors tension, que la chambre (19) du côté piston est protégée dans la direction d'échappement par une vanne anti-retour (33) capable de verrouiller hydrauliquement la conduite de travail (31), et que la vanne à siège de secours magnétique tout ou rien à 2/2 voies (V3) et la vanne à siège magnétique à 3/2 voies (V4) sont alimentées en courant en mode régénération.

7. Dispositif de commande régénérateur électro-hydraulique suivant la revendication 1, **caractérisé en ce que** les deux vannes à siège proportionnelles à 2/2 voies (V1, V2) présentent une construction commune avec leurs aimants proportionnels (m3, m2).
